## Europäisches Patentamt
## European Patent Office
## Office européen des brevets

(11) Veröffentlichungsnummer: **0 224 778**
**B1**

(12) **EUROPÄISCHE PATENTSCHRIFT**

(45) Veröffentlichungstag der Patentschrift:
03.05.89

(51) Int. Cl.⁴: **C14C 9/00**

(21) Anmeldenummer: **86115878.0**

(22) Anmeldetag: **15.11.86**

(54) **Lederpflegeemulsion.**

(30) Priorität: **23.11.85 DE 3541434**

(43) Veröffentlichungstag der Anmeldung:
**10.06.87 Patentblatt 87/24**

(45) Bekanntmachung des Hinweises auf die Patenterteilung:
**03.05.89 Patentblatt 89/18**

(84) Benannte Vertragsstaaten:
**AT BE CH DE FR GB IT LI NL**

(56) Entgegenhaltungen:
**EP-A- 0 131 192**
**US-A- 4 497 919**

**CHEMICAL ABSTRACTS, Band 94, Nr. 15, 13. April 1981,
Seite 376, Zusammenfassung Nr. 127234a, Columbus,
Ohio, US; M. NAKAMURA et al.: "Stabilization of o/w
type emulsions with natural polymers", &
YAKUZAIGAKU 1980, 40(3), 151-6**

(73) Patentinhaber: **Henkel Kommanditgesellschaft auf
Aktien, Postfach 1100 Henkelstrasse 67,
D-4000 Düsseldorf-Holthausen(DE)**

(72) Erfinder: **Soldanski, Heinz-Dieter, Neckarstrasse 64,
D-4300 Essen 18(DE)**
Erfinder: **Holdt, Bernd-Dieter, Gutenbergstrasse 45,
D-4000 Düsseldorf 1(DE)**
Erfinder: **Hasselbach, Petra, Brückstrasse 46,
D-4030 Ratingen 1(DE)**
Erfinder: **Duhan, Marianne, Adam-Stegerwald 20,
D-4000 Düsseldorf 13(DE)**

ACTORUM AG

## Beschreibung

Die vorliegende Erfindung betrifft Wachsemulsionen in Pastenform, die in erster Linie zur Pflege von Schuhen, aber auch zur Pflege von Ledern allgemein verwendet werden.

Als Schuhpflegemittel werden heute noch überwiegend Produkte auf Lösungsmittelbasis verwendet. Bei diesen Schuhcremes handelt es sich um salbenartige oder pastöse Gemische aus wachsartigen Substanzen und organischen Lösungsmitteln, die meist in Dosen abgepackt werden. Sie eignen sich hervorragend für die Pflege gedeckter Leder, weniger gut dagegen zur Pflege von ungedeckten und wenig gedeckten Ledern, an denen sie wegen ihres hohen Gehaltes an organischen Lösungsmitteln Verfleckungen hervorrufen. Man hat deshalb für diese empfindlicheren Leder Pflegemittel in Form wäßriger Emulsionen entwickelt, die sehr viel weniger organisches Lösungsmittel enthalten.

Die heute üblichen Lederpflegemittel in Form wäßriger Emulsionen enthalten außer Wasser Wachse, Emulgatoren sowie gegebenenfalls Lösungsmittel und andere in Lederpflegemitteln übliche Zusätze. Wegen ihrer geringen Konsistenz werden diese Mittel nahezu ausschließlich in Tuben abgefüllt, da andere Verpackungsformen die sachgerechte Entnahme erschweren.

Wie sich aus den Verkaufszahlen ergibt, bevorzugt aber der Verbraucher nach wie vor die in Dosen abgepackte Ware, obwohl die Verwendung ungedeckter oder schwach gedeckter Leder in den letzten Jahren in der Schuhindustrie stark zugenommen hat.

Da die in Tuben abgepackten Pflegemittel in Emulsionsform im allgemeinen sowohl für ungedeckte als auch für gedeckte Leder geeignet sind, ist wahrscheinlich allein die Verpackungsform Dose der Grund für die Bevorzugung der lösungsmittelhaltigen Cremes.

Es bestand daher die Aufgabe, ein Leder- und Schuhpflegemittel zu entwickeln, das einerseits die feinlederspezifischen Vorzüge der emulsionsförmigen Mittel aufweist, andererseits aber auch ohne Nachteile in Dosen abgepackt werden kann.

Die vorliegende Erfindung bietet eine Lösung dieser Aufgabe. Sie besteht in einer pastenförmigen Lederpflegeemulsion, die Wachs, Emulgator, Wasser und gegebenenfalls weitere übliche Hilfs- und Zusatzstoffe und außerdem ein anionisches Polysaccharid als Coemulgator enthält.

Die erfindungsgemäße Emulsion besitzt eine ausreichend hohe Viskosität, so daß sie in Dosen abgepackt werden kann. Durch die Wahl des Coemulgators erhält die Emulsion darüber hinaus eine Konsistenz, die es auch gestattet, sie in der bei Schuhcremes üblichen und akzeptierten Weise in kleinen Mengen aus der Dose, beispielsweise mit einer Bürste oder einem Lappen, zu entnehmen und sie mühelos gleichmäßig auf dem Leder zu verteilen. Dabei weisen solche Emulsionen, in denen als anionisches Polysaccharid kappa-Carrageenan enthalten ist, besonders günstige Konsistenzeigenschaften auf. Eine weitere Verbesserung kann noch dadurch erreicht werden, daß als Wachs ausschließlich oder überwiegend Montanesterwachse verwendet werden. Die Reinigungseigenschaften der Pflegemittel werden durch einen Zusatz kleiner Mengen an Benzin, die Witterungsbeständigkeit durch Zusatz von Silikonöl verbessert. Die erfindungsgemäßen Mittel eignen sich sowohl zur Pflege gedeckter Leder als auch zur Pflege wenig oder nicht gedeckter Leder.

Eine bevorzugte Zusammensetzung der Pflegeemulsion besitzt folgende Zusammensetzung:
5–30 Gew.-% Wachs
0–10 Gew.-% Silikonöl
0–20 Gew.-% Benzin
0,5–5 Gew.-% Emulgator
0,5–8 Gew.-% anionisches Polysaccharid
0–5 Gew.-% übliche Hilfs- und Zusatzstoffe
ad 100 Gew.-% Wasser

Im folgenden wird eine Beschreibung der einzelnen Inhaltsstoffe gegeben:

### Wachse

Die verwendbaren Wachse weisen Tropfpunkte im Bereich von 50 bis 110 °C auf. Insbesondere eignen sich die carboxylgruppenhaltigen Wachse mit Säurezahlen zwischen 5 und 155 mg KOH pro Gramm Wachs. Hierzu zählen oxydierte Paraffin- und Polyethylenwachse sowie Wachse auf Basis Rohmontanwachs. Besonders günstige Eigenschaften werden erhalten, wenn man Montanesterwachse oder Gemische von Montanesterwachsen, insbesondere, mit Säurezahlen zwischen 15 und 40, entweder allein oder als überwiegenden Bestandteil des Wachsgemisches verwendet. Dabei soll der Anteil der Montanesterwachse vorzugsweise mindestens 60 Gew.-% und insbesondere mindestens 80 Gew.-% des gesamten Wachses in der Emulsion ausmachen. Andere Wachse, wie Paraffinwachse, Polyethylenwachse oder Naturwachse, wie Carnaubawachs, Candelillawachs, Bienenwachs oder Ozokerite, werden vorzugsweise nur in geringen Mengen beigemischt, um die Gebrauchseigenschaften der Creme, beispielsweise den Glanz und die Knickbruchtendenz des gebildeten Films, zu modifizieren.

Der Gehalt an Wachsen beträgt im allgemeinen 5–30%, vorzugsweise 7–20%, bezogen auf das Gesamtgewicht der Emulsion.

### Emulgatoren

Als Emulgatoren eignen sich übliche nichtionische und anionische Wachsemulgatoren die zu Öl-in-Wasser-Emulsionen führen. Zu den nichtionischen Emulgatoren zählen beispielsweise die Sorbitanester der höheren Fettsäuren sowie die Alkylenoxydaddukte an höhere lineare ein- und mehrwertige Alkohole, Alkylphenole, langkettige Carbonsäuren, Carbonsäureamide und Hydroxyfettsäuren mit 10 bis 24 C-Atomen sowie an Fettsäureglycerin- oder Sorbitanester. Vorzugsweise werden die Addukte von 5 bis 40 Mol Ethylenoxid an langkettige, insbesondere primäre Alkohole mit 12 bis 18 C-Atomen und an Fettsäuresorbitanester eingesetzt. Als anionische Emulgatoren kommen die Alkali-, Amonium-, Amin- und Erdalkalisalze langkettiger Alkylsulfate, Sulfonate und Phosphorsäurepartialester in Frage. Insbesondere eignen sich die Salze von Schwefelsäurehalbestern oder Phosphorsäurepartialestern der linearen Alkohole oder Alkylphenole mit jeweils 12 bis 18 C-Atomen oder der Polyglykolmonoalkylether mit 12 bis 18 C-Atomen in der Alkylgruppe sowie die 12 bis 20 C-Atome enthaltenden Olefinsulfonate, Estersulfonate und Alkansulfonate, die Alkylbenzolsulfonate mit 6 bis 16 C-Atomen in den Alkylgruppen, die Sulfonate der Polyglykolmonoalkylether mit 12 bis 18 C-Atomen in den Alkylgruppen und die Salze der Fettsäuren mit 12 bis 18 C-Atomenund der Montansäuren mit 24 bis 32 C-Atomen. Vorzugsweise werden von diesen anionischen Emulgatoren Fettsäureaminsalze, insbesondere Salze der Alkanol- oder Alkanolalkylamine mit 2 bis 7 C-Atomen, verwendet.

Der Anteil der Emulgatoren an der Gesamtemulsion beträgt im allgemeinen 0,5 bis 5 Gew.-%, vorzugsweise 1 bis 3 Gew.-%, unabhängig davon, ob ein einzelner Emulgator oder ein Gemisch mehrerer Emulgatoren verwendet wird.

## Anionische Polysaccharide

Die in den Emulsionen enthaltenden anionischen Polysaccharide dienen als Coemulgatoren, die im Zusammenspiel mit den säuregruppenhaltigen Wachsen und/oder den anderen Emulgatoren zu einer Verfestigung der Emulsion führen. Verwendbar sind sowohl natürliche als auch chemisch modifizierte Polysaccharide, beispielsweise die natürlichen Polysaccharide Pektin, Algin und Gummiarabicum oder die modifizierten Polysaccharide Carboxymethylstärke und Hydroxyethylcarboxymethylguar. Die anionischen Polysaccharide können einzeln oder in Mischung verwendet werden; sie liegen vorzugsweise als Salze oder Partialsalze vor. Besonders bevorzugt wird kappa-Carrageenan, ein Sulfatgruppen enthaltendes Polysaccharid aus Rotalgen, das es erlaubt, mit einer Vielzahl von Wachsen Emulsionen herzustellen, die sowohl eine hohe Festigkeit in der Dose aufweisen als auch bei der Auftragung leicht verteilbar sind.

Der Gehalt der Emulsion an anionischem Polysaccharid liegt im allgemeinen bei 0,5 bis 8 Gew.-%, vorzugsweise 1 bis 5 Gew.-%.

## Lösungsmittel

Die erfindungsgemäßen Emulsionen können ohne organische Lösungsmittel zubereitet werden und besitzen in dieser Form gute Pflegeeigenschaften auf allen gebräuchlichen Ledern. Vorzugsweise enthalten sie jedoch geringe Mengen an Benzin, um die Reinigungswirkung der Emulsionen zu verbessern. Im allgemeinen liegt der Benzingehalt der Emulsionen nicht über 20 Gew.-%, insbesondere zwischen 5 und 15 Gew.-%. Vorzugsweise werden entaromatisierte Benzine mit Siedebereichen von 120 bis 250°C, insbesondere 150 bis 200°C verwendet.

## Silikonöl

Als Polierhilfen und zur Verbesserung der Witterungsbeständigkeit der Pflegemittelfilme können die Emulsionen Silikonöle enthalten.

Geeignet sind Silikonöle mit Viskositäten zwischen 1000 und 60 000 mPas. Ihr Gehalt in den Emulsionen liegt nicht über 10 Gew.-%, vorzugsweise zwischen 0,5 und 5 Gew.-%.

## Hilfsstoffe

Weiterhin können die Emulsionen bis zu 5 Gew.-% an anderen in Schuh- und Lederpflegemittel üblichen Hilfs- und Zusatzstoffen enthalten. Beispiele sind Pflegesubstanzen, wie Lanolin, Vaseline oder Lederöle, Neutralisierungsmittel, Parfüm, Konservierungsmittel und Farbstoffe. Vorzugsweise sind zwischen 0,1 und 5 Gew.-% an Hilfs- und Zusatzstoffen in den Mitteln enthalten. Eine besonders bevorzugte Emulsion hat folgende Zusammensetzung:
7–20 Gew.-% Wachs, bestehend zu mehr als 60 Gew.-% aus Montanesterwachsen mit Säurezahlen von 15 bis 40 ,
0,5–5 Gew.-% Silikonöl mit einer Viskosität zwischen 1000 und 60 000 mPas,
5–15 Gew.-% entaromatisiertes Benzin mit einem Siedebereich zwischen 150 und 200°C,
1–3 Gew.-% Wachsemulgator aus der Gruppe ethoxylierte langkettige Alkohole, ethoxylierte Fettsäuresorbitanester, Fettsäure-Aminsalze und deren Mischungen,
1–5 Gew.-% Kappa-Carrageenan,
0–5 Gew.-% übliche Hilfs- und Zusatzstoffe
ad 100 Gew.-% Wasser.

Die Herstellung der Emulsionen wird im allgemeinen folgendermaßen durchgeführt:

Aus Wasser, Polysaccharid und gegebenenfalls Neutralisierungsmittel, wird unter Rühren eine Lösung hergestellt und diese auf Temperaturen zwischen 50 und 100°C erwärmt. Unter Rühren wird in diese Lösung eine ebenfalls auf Temperaturen zwischen 50 und 100°C erwärmte Mischung, die Wachs, Benzin, Emulgator und gegebenenfalls Silikonöl und weitere Pflegesubstanzen enthält, eingetragen, wobei sich die Emulsion ausbildet. Gegebenenfalls werden weitere Hilfsstoffe unter Rühren eingemischt. Die noch warme Emulsion wird in die vorgesehenen Behälter abgefüllt und erstarrt dort beim Abkühlen zu einer halbfesten Masse.

## Beispiel

In einem Rührbehälter wurden 70 kg Wasser mit 3 kg kappa-Carrageenan vermischt und unter Erwärmen auf 70°C solange gerührt bis eine homogene Lösung entstanden war. In einem weiteren Rührkessel wurden unter Erwärmen auf 70°C folgende Komponenten zu einer Mischung zusammengeschmolzen:
6,6 kg modifiziertes Montanesterwachs (Säurezahl 15–22, Verseifungszahl 60–90)
3,4 kg modifiziertes Montanesterwachs (Säurezahl 28–38, Verseifungszahl 130–150)
1,1 kg Silikonöl (60 000 mPas)
12,5 kg entaromatisiertes Benzin (Siedebereich 150–195°C)
0,5 kg Lanolin
1,5 kg nichtionischer Emulgator (Oleylalkohol + 23 EO)

Die Wachsmischung wurde unter starkem Rühren innerhalb von 10 Minuten in die wäßrige Lösung eingetragen. Unter weiterem Rühren wurden 200 g eines Lederparfüms und 1,2 l einer wäßrigen Lösung von 13 g eines Konservierungsmittels (Isothiazolinderivat) zugegeben. Die flüssige Emulsion wurde in Dosen abgefüllt und erstarrte dort beim Abkühlen zu einer pastösen, nahezu farblosen Masse.

Die Lederpflegeemulsion wies damit folgende Zusammensetzung auf:

10 Gew.-% Wachse
1,1 Gew.-% Silikonöl
12,5 Gew.-% Benzin
1,5 Gew.-% Emulgator
3,0 Gew.-% Carrageenan
0,5 Gew.-% Lanolin
0,2 Gew.-% Parfüm
0,013 Gew.-% Konservierungsmittel
71,187 Gew.-% Wasser

Die Emulsion ließ sich problemlos sowohl mit einem Lappen als auch mit einer Bürste in kleinen Portionen aus der Dose entnehmen und konnte leicht und ohne zu krümeln gleichmäßig auf Lederoberflächen verteilt werden. Sie eignete sich hervorragend für die Pflege sowohl gedeckter als auch wenig oder gar nicht gedeckter Leder.

**Patentansprüche**

1. Pastenförmige Lederpflegeemulsion in Form einer Öl-in-Wasser-Emulsion, enthaltend Wachs, Emulgator, Wasser und gegebenenfalls übliche Hilfs- und Zusatzstoffe, dadurch gekennzeichnet, daß ein anionisches Polysaccharid als Coemulgator enthalten ist.

2. Lederpflegeemulsion nach Anspruch 1, in der als anionisches Polysaccharid kappa-Carrageenan enthalten ist.

3. Lederpflegeemulsion nach einem der Ansprüche 1 oder 2, die weiterhin Benzin enthält.

4. Lederpflegeemulsion nach einem der Ansprüche 1 bis 3, die weiterhin Silikonöl enthält.

5. Lederpflegeemulsion nach einem der Ansprüche 1 bis 4, in der das enthaltene Wachs Säurezahlen zwischen 5 und 155 aufweist.

6. Lederpflegeemulsion nach einem der Ansprüche 1 bis 5, in der der Wachsanteil ganz oder überwiegend aus Montanesterwachsen besteht.

7. Lederpflegeemulsion nach Anspruch 1, bestehend aus 5–30 Gew.-% Wachs mit einem Tropfpunkt zwischen 50 und 110 °C,
0–10 Gew.-% Silikonöl mit einer Viskosität zwischen 1000 und 60 000 mPas,
0–20 Gew.-% Benzin mit Siederbereichen zwischen 120 und 250°C,
0,5–5 Gew.-% nichtionischer oder anionischer Wachsemulgator,
0,5–8 Gew.-% anionisches Polysaccharid,
0–5 Gew.-% übliche Hilfs- und Zusatzstoffe,
ad 100 Gew.-% Wasser.

8. Lederpflegeemulsion nach Anspruch 7, bestehend aus 7–20 Gew.-% Wachs, bestehend zu mehr als 60 Gew.-% aus Montanesterwachsen mit Säurezahlen von 15 bis 40,
0,5–5 Gew.-% Silikonöl mit einer Viskosität zwischen 1000 und 60 000 mPas,
5–15 Gew.-% entaromatisiertes Benzin mit einem Siedebereich zwischen 150 und 200 °C,
1–3 Gew.-% Wachsemulgator aus der Gruppe ethoxylierte langkettige Alkohole, ethoxylierte Fettsäuresorbitanester, Fettsäure-Aminsalze und deren Mischungen,
1–5 Gew.-% kappa-Carrageenan,
0–5 Gew.-% übliche Hilfs- und Zusatzstoffe,
ad 100 Gew.-% Wasser.

9. Verwendung einer Emulsion nach einem der Ansprüche 1 bis 8 zur Pflege von Leder oder Schuhen.

**Claims**

1. A paste-form leather-care emulsion in the form of an oil-in-water emulsion containing wax, emulsifier, water and, optionally, standard auxiliaries and additives, characterized in that it contains an anionic polysaccharide as co-emulsifier.

2. A leather-care emulsion as claimed in claim 1 in which kappa-carrageenan is present as the anionic polysaccharide.

3. A leather-care emulsion as claimed in claim 1 or 2 additionally containing gasoline.

4. A leather-care emulsion as claimed in any of claims 1 to 3 additionally containing silicone oil.

5. A leather-care emulsion as claimed in any of claims 1 to 4, which the wax present has acid values of from 5 to 155.

6. A leather-care emulsion as claimed in any of claims 1 to 5, in which the wax component consists entirely or predominantly of montan ester waxes.

7. A leather-care emulsion as claimed in claim 1 consisting of 5 to 30% by weight wax having a dropping point of 50 to 110°C,
0 to 10% by weight silicone oil having a viscosity of from 1000 to 60,000 mPa.s,
0 to 20% by weight gasoline having a boiling range of 120 to 250°C,
0.5 to 5% by weight nonionic or anionic wax emulsifier,
0.5 to 8% by weight anionic polysaccharide,
0 to 5% by weight standard auxiliaries and additives, ad 100% by weight water.

8. A leather-care emulsion as claimed in claim 7 consisting of 7 to 20% by weight wax of which more than 60% by weight consists of montan ester waxes having acid values of from 15 to 40,
0.5 to 5% by weight silicone oil having a viscosity of from 1000 to 60,000 mPa.s,
5 to 15% by weight de-aromaticized gasoline having a boiling range of 150 to 200°C,
1 to 3% by weight wax emulsifier from the group consisting of ethoxylated long-chain alcohols, ethoxylated fatty acid sorbitan esters, fatty acid amine salts and mixtures thereof, 1 to 5% by weight kappa-carrageenan,
0 to 5% by weight standard auxiliaries and additives, ad 100% by weight water.

9. The use of the emulsion claimed in any of claims 1 to 8 for the care of leather or shoes.

## Revendications

1. Emulsion de produit d'entretien du cuir, pâteuse, sous la forme d'une émulsion huile dans l'eau, contenant de la cire, un émulsionnant, de l'eau et le cas échéant des adjuvants et des additifs usuels, caractérisée en ce qu'un polysaccharide anionique comme co-émulsionnant est contenu.

2. Emulsion de produit d'entretien du cuir selon la revendication 1 dans laquelle le Carraghenane-Kappa y est contenu comme polysaccharide anionique.

3. Emulsion de produit d'entretien selon l'une des revendications 1 ou 2, qui contient en outre de l'essence.

4. Emulsion selon l'une des revendications 1 à 3 qui contient en outre de l'huile de silicone.

5. Emulsion d'agent d'entretien du cuir selon l'une des revendications 1 à 4 dans laquelle la cire qui y est contenue possède un indice d'acidité entre 5 et 155.

6. Emulsion d'agent d'entretien du cuir selon l'une des revendications 1 à 5, dans laquelle la quantité de cire est constituée en totalité ou d'une manière prédominante de cire d'ester montanique.

7. Emulsion d'agent d'entretien du cuir selon la revendication 1 consistant en:
5 à 30% en poids de cire ayant un point de goutte entre 50 et 110°C,
0 à 10% en poids d'huile de silicone ayant une viscosité entre 1000 et 60 000 mPas,
0 à 20% en poids d'essence avec une zone d'ébullition entre 120 et 250°C,
0,5 à 5% poids d'émulsionnant de cire non-ionique ou anionique,
0,5 à 8% en poids d'un polysaccharide anionique,
0 à 5% en poids d'additifs et d'adjuvants usuels et qsp 100% d'eau en poids.

8. Emulsion d'agent d'entretien du cuir selon la revendication 7 qui consiste en:
7 à 20% en poids de cire consistant en jusqu'à plus de 60% en poids de cire d'ester montanique ayant un indice d'acidité de 15 à 40,
0,5 a 5% en poids d'huile de silicone ayant une viscosité entre 1000 et 60 000 mPas,
5 à 15% en poids d'essence désaromatisée ayant une zone d'ébullition entre 150 et 200°C,
1 à 3% en poids d'un émulsionnant de cire choisi dans le groupe constitué par les alcools à longue chaîne éthoxylés, les esters de sorbitane d'acides gras éthoxylés, des sels d'amine d'acides gras et leurs mélanges,
1 à 5% en poids de Carraghenane-Kappa,
0 à 5% en poids d'additifs et d'adjuvants usuels et qsp 100% en poids d'eau.

9. Utilisation d'une émulsion selon l'une des revendications 1 à 8 pour l'entretien du cuir et des chaussures.